# EUROPÄISCHE PATENTANMELDUNG

(11) **EP 0 787 623 A2**
(43) Veröffentlichungstag der Anmeldung: **06.08.1997**
(21) Anmeldenummer: 97101613.4
(22) Anmeldetag: 03.02.1997
(51) Int. Cl.: B60Q 7/00

(54) **Warndreieck zum Mitführen in Kraftfahrzeugen**

(30) Priorität: 03.02.1996 DE 19603922
(71) Anmelder: Winkler, Winfried, 52076 Aachen (DE)
(72) Erfinder: Winkler, Winfried, 52076 Aachen (DE)
(74) Vertreter: Rehders, Jochen, Dipl.-Ing.

(57) **Zusammenfassung**

Warndreieck zum Mitführen in Kraftfahrzeugen aus einer formsteifen Tafel mit Stützeinrichtungen zum freien Aufstellen, wenigstens drei Klappgelenken in der Tafel zum Zusammenklappen der Spitzen zu einer rechteckigen oder quadratischen Tafel, Klappgelenken an den Stützeinrichtungen zum Zusammenklappen auf das Format der Tafel und Feststellelementen für die Tafel und die Stützeinrichtungen zum Halten der ausgeklappten Spitzen und der Stützeinrichtungen in der aufgestellten Stellung.

## Beschreibung

Die Erfindung betrifft ein Warndreieck zum Mitführen in Kraftfahrzeugen aus einer formsteifen Tafel mit Stützeinrichtungen zum freien Aufstellen.

Um ein derartiges Warndreieck in einem Kraftfahrzeug platzsparend verstauen zu können, wurde in der deutschen Offenlegungsschrift 40 19 063 bereits ein Warndreieck beschrieben, das aus mehreren, flächensteifen Tafelabschnitten besteht, die beweglich miteinander verbunden sind, wodurch die Warntafel aus einer Gebrauchsstellung, in der die Warnflächen der Tafelabschnitte einander ergänzend aneinander anschließen, in eine Nichtgebrauchsstellung überführbar ist, in der die Tafelabschnitte einander überdecken, wobei ein zu einem Basisabschnitt herunterbewegbarer Tafelabschnitt der Warntafel einen oberen Eckbereich der Warnfläche umfaßt, der dreieckig gestaltet ist und entlang einer Verbindungslinie zum Basisabschnitt an diesem angelenkt ist, wodurch die rückwärtigen Flächen des Tafelabschnitts und des Basisabschnitts aufeinander klappbar sind. In der Gebrauchsstellung ist der Tafelabschnitt des Warndreiecks unter Abstützung gegenüber dem Basisabschnitt schwenkfixierbar. Der Basisabschnitt ist mit Standbügeln versehen, mit denen das Warndreieck frei aufstellbar ist. Ein unbeweglicher Standbügel ist an der Unterseite des Warndreiecks befestigt und erstreckt sich über die gesamte Länge der Basiskante des Warndreiecks, während ein mittig angelenkter, schwenkbarer Standbügel etwa die gleiche Länge aufweist, sich in der Nichtgebrauchsstellung in eine zum unbeweglichen Standbügel parallele Stellung klappen läßt und sich in der Gebrauchsstellung in eine zum unbeweglichen Standbügel etwa rechtwinklig verlaufende Stellung schwenken läßt.

Dieses bekannte Warndreieck nimmt in der zusammengeklappten Stellung einen großen Raum ein, da sich das Warndreieck nur auf etwas mehr als seine halbe Höhe zusammenklappen läßt, die Länge des zusammengeklappten Warndreiecks und der Standbügel aber unverändert bleiben.

Ein zusammengeklapptes Warndreieck dieser Größe läßt sich im Kofferraum einer Kraftfahrzeuges nur schwer und im Griffbereich des Fahrers nur unter großen Schwierigkeiten unterbringen.

Der Erfindung liegt die Aufgabe zugrunde, ein Warndreieck zum Mitführen in Kraftfahrzeugen zu schaffen, dessen Abmessungen in zusammengelegter Form wesentlich vermindert sind, dessen äußere Form im zusammengelegten Zustand die Ablage auch in Griffnähe des Fahrers raumsparend und nicht störend gewährleistet und das sich von ungeübten Personen leicht, schnell und problemlos aufstellen läßt.

Ausgehend von dieser Problemstellung wird ein Warndreieck vorgeschlagen, das erfindungsgemäß wenigstens drei Klappgelenke in der Tafel zum Zusammenklappen der Spitzen zu einer rechteckigen oder quadratischen Tafel, Klappgelenke an den Stützeinrichtungen zum Zusammenklappen auf das Format der Tafel und Feststellelemente für die Tafel und die Stützeinrichtungen zum Halten der ausgeklappten Spitzen und der Stützeinrichtungen in der aufgeklappten Stellung aufweist.

Auf diese Weise entsteht bei einem Warndreieck mit gleichlangen Seiten eine rechteckige Fläche, deren langen Seite der Hälfte der Kantenlänge des Warndreiecks und deren kurzen Seite der Hälfte der Höhe des Warndreiecks entspricht. Allein durch diese Maßnahme wird die Fläche des Warndreiecks halbiert und gleichzeitig auf ein handliches Rechteckformat gebracht. Das zusammengeklappte Warndreieck hat nur die doppelte Dicke des Warndreiecks im aufgeklappten Zustand, wenn es ein Klappgelenk parallel zu einer Seite und auf halber Höhe des Dreiecks und zwei Klappgelenke senkrecht zum ersten Klappgelenk, ausgehend von der einen Seite mit jeweils einem Abstand gleich einem Viertel der Länge von den Eckpunkten dieser Seite aufweist.

Die Stützeinrichtung besteht vorzugsweise aus einem der zusammengeklappten Tafel angepaßten Träger mit wenigstens drei ausklappbaren Stützen, an dessen einer Seite die Tafel des Warndreiecks angelenkt ist.

In der Nichtgebrauchsstellung wird das Warndreieck zu einer rechteckigen Tafel zusammengeklappt, auf den Träger geklappt und die wenigstens drei ausklappbaren Stützen werden unter den Träger geklappt, so daß das Warndreieck im zusammengeklappten Zustand ein Rechteckformat aufweist, das sich leicht neben dem Fahrersitz verstauen und sich ohne Schwierigkeiten auch durch eine ungeübte Person schnell und einfach aufstellen läßt.

Wenn die Dicke des Warndreiecks im zusammengeklappten Zustand keine wesentliche Bedeutung hat, läßt sich die Fläche im zusammengeklappten Zustand noch einmal halbieren, indem ein weiteres, senkrecht auf der Mitte der einen Seite verlaufendes Klappgelenk in der Tafel des Warndreiecks vorgesehen wird. Die Fläche beträgt dann nur noch ein Viertel der Fläche des aufgeklappten Warndreiecks, jedoch hat die Tafel nunmehr die vierfache Dicke des Warndreiecks im aufgeklappten Zustand. Diese Dicke ist von geringerer Bedeutung, wenn man bedenkt, daß das Warndreieck im aufgeklappten Zustand eine Dicke von etwa 5 mm aufweist, so daß das zusammengeklappte Warndreieck nur noch die Abmessungen 11 x 20 x 2 cm aufweist, was einem Volumen von etwa 0,5 l entspricht. Hinzu kommt noch der Träger mit den ausklappbaren Stützen, deren Dicke insgesamt 10 mm nicht überschreiten.

Die Klappgelenke können aus Scharnierbändern bestehen, in die Federn integriert sind, so daß die ausgeklappten Spitzen und/oder die Stützeinrichtungen in der aufgestellten Stellung des Warndreiecks federelastisch gehalten werden.

Zusätzlich zu diesen federelastischen Feststellelementen oder anstelle dieser federelastischen Feststellelemente können auch schwenk- oder verschiebbare Sperriegel vorgesehen sein, die die ausgeklappten Spitzen und/oder die Stützeinrichtungen in der aufgestellten Stellung verriegeln. Vorzugsweise kann der Träger für das Warndreieck als die zusammengeklappte Tafel aufnehmender Rahmen ausgebildet sein, an dessen einer Seite die Tafel angelenkt ist. An diesem Rahmen kann ein Sperriegel angeordnet sein, der die zusammengeklappte Tafel im Rahmen festhält. Sobald dieser Sperriegel gelöst wird, klappt das Warndreieck selbsttätig in die Gebrauchsstellung.

Vorzugsweise können die Enden der ausklappbaren Stützen abgeknickt sein, um das Warndreieck beim Aufstellen in eine angehobene Stellung zu bringen. Werden die Achsen der Klappgelenke der Stützen am Träger entsprechend dem Winkel der Abknickung winklig zur Ebene des Trägers angeordnet, beschreiben die Stützen beim Ausschwenken eine Bewegung die die Endpunkte der Stützen nach unten führt, wodurch beim Aufstellen eine weitere Anhebung des Warndreiecks bewirkt wird.

Ist das Warndreieck mit vorzugsweise vier Stützen versehen, können zwei Stützen an einer Seite im Bereich der Ecken des Trägers und zwei weitere Stützen an der gegenüberliegenden Parallelseite des Trägers mit einem der Breite der Stützen angepaßten Abstand von den Ecken angelenkt sein, so daß sich die vier Stützen raumsparend unter den Träger schwenken lassen und nur wenig Raum beanspruchen.

Die Erfindung wird nachstehend anhand mehrerer in der Zeichnung dargestellter Ausführungsbeispiele des näheren erläutert. In der Zeichnung zeigen:
- Fig. 1: eine perspektivische Darstellung eines Warndreiecks in der aufgeklappten Stellung,
- Fig. 2: eine perspektivische Darstellung eines Warndreiecks in der zusammengeklappten Stellung,
- Fig. 3: eine Vorderansicht des Warndreiecks mit Darstellung des Verlaufs der Klappgelenke,
- Fig. 4: eine Draufsicht des Warndreiecks in der zusammengeklappten Stellung,
- Fig. 5: eine Draufsicht auf ein vierfach zusammenklappbares Warndreieck mit Darstellung des Verlaufs der Klappgelenke,
- Fig. 6: eine perspektivische Darstellung des vierfach zusammengeklappten Warndreiecks,
- Fig. 7: eine teilweise Schnittansicht des Warndreiecks mit federelastischen Feststellelementen in der aufgeklappten Stellung,
- Fig. 8: eine Darstellung entsprechend Fig. 7 beim Zusammenklappen,
- Fig. 9: eine Unteransicht des Warndreiecks in der zusammengeklappten Stellung,
- Fig. 10: eine Unteransicht des Warndreiecks mit ausgeklappten Stützen und
- Fig. 11: eine seitliche Schnittansicht mit Darstellung der Stützen im eingeklappten und ausgeklappten Zustand.

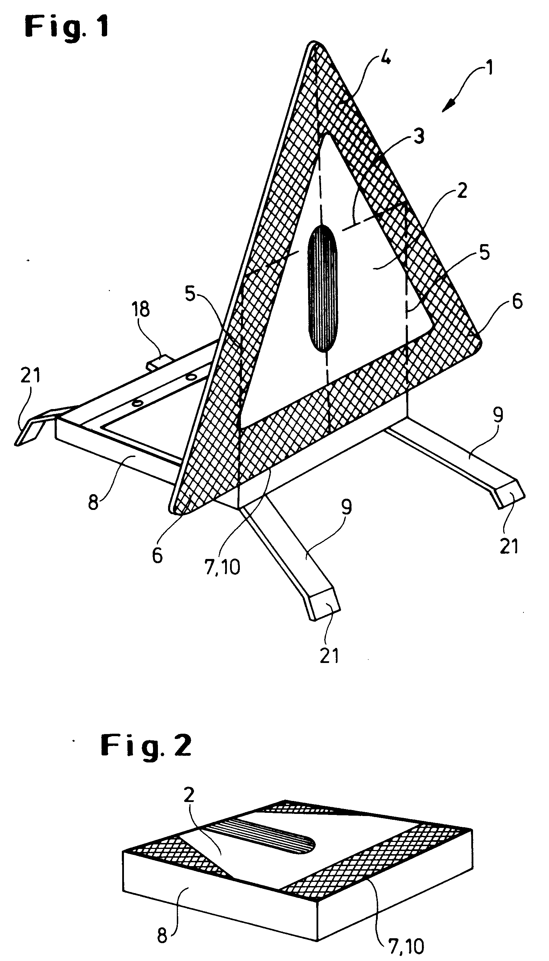

Ein frei aufstellbares Warndreieck 1 für Kraftfahrzeuge besteht bekanntermaßen aus einer ein gleichseitiges Dreieck bildenden Tafel, deren Ränder rot reflektierend ausgebildet sind und die innerhalb der rot reflektierenden Ränder einen weißen Bereich mit einem schwarzen, senkrechten Balken aufweist. Bei der Ausführungsform gemäß Fig. 1 ist die Tafel durch ein waagerechtes Klappgelenk 3 und zwei senkrechte Klappgelenke 5 in einen rechteckigen Bereich 2, eine obere Dreiecksspitze 4 und zwei seitliche Dreiecksspitzen 6 unterteilt.

Das Klappgelenk 3 ist auf halber Höhe des Warndreiecks angeordnet, während die senkrechten Klappgelenke 5 jeweils auf einem Viertel der Länge einer Basisseite 7 des Warndreiecks verlaufen. Die Basisseite 7 ist mittels eines Klappgelenks 10 an einem als Rahmen ausgebildeten Träger 8 angelenkt. An diesen Träger 8 sind wenigstens drei ausklappbare Stützen 9 angelenkt, so daß sich das Warndreieck 1 in der in Fig. 1 dargestellten Stellung aufstellen läßt.

Werden die Dreiecksspitzen 6 um die Klappgelenke 5 auf die rechteckige Tafel 2 und die Dreiecksspitze 4 um das Klappgelenk 3 ebenfalls auf die Tafel 2 geklappt, vermindert sich die Fläche des Warndreiecks auf die Hälfte und dieses Rechteck läßt sich in den rahmenförmigen Träger 8 klappen, wie dies in Fig. 2 ersichtlich ist.

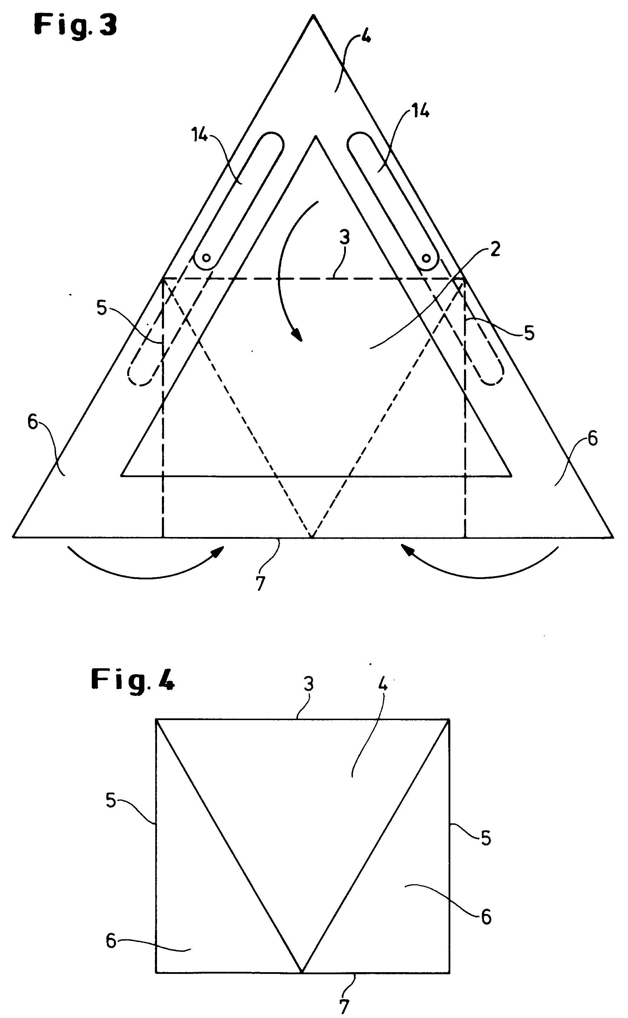

In Fig. 3 und 4 ist noch einmal in Draufsicht dargestellt, wie die Klappgelenke 3, 5 verlaufen und wie sich die Dreiecksspitzen 4, 6 auf die rechteckige Tafel 2 klappen lassen.

An der Dreiecksspitze 4 sind in der Nähe des Klappgelenks 3 Feststellelemente 14 in Form von Klappriegeln angeordnet, die in der ausgezogenen Stellung ein Umklappen der Dreiecksspitze 4 auf die Tafel 2 zulassen und in der gestrichelt dargestellten Stellung die Dreiecksspitzen 4, 6 in der ausgeklappten Stellung verriegeln.

Diese Feststellelemente 14 können auch als Schieberiegel gestaltet sein, um sie aus der ausgezogenen Stellung in die gestrichelte Stellung verschieben zu können.

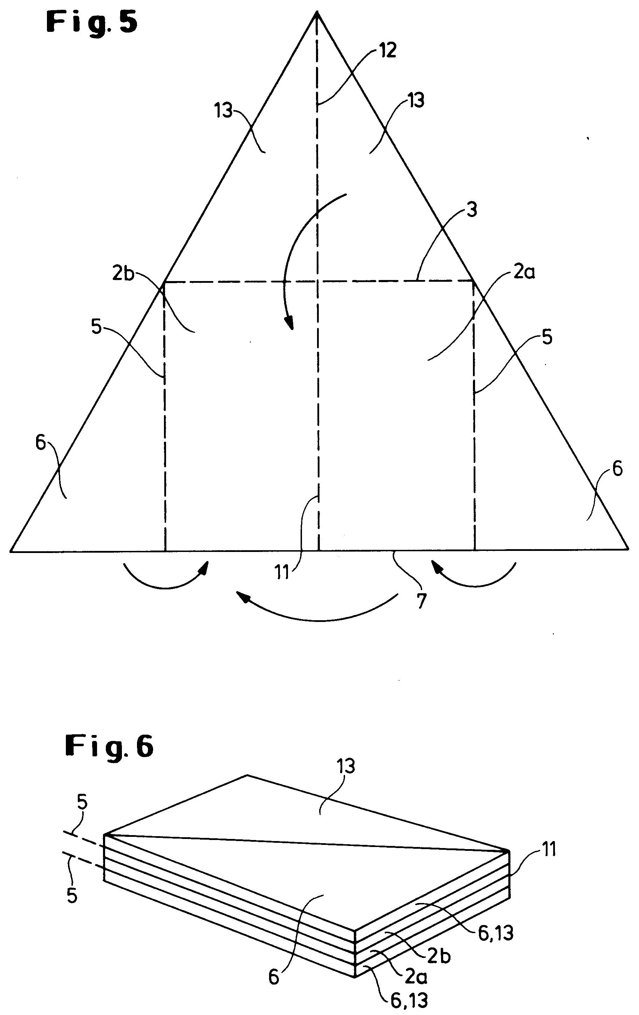

In Fig. 5 und 6 ist dargestellt, wie sich die Fläche des zusammengeklappten Warndreiecks noch einmal halbieren läßt. Zu diesem Zweck ist ein weiteres Klappgelenk 11 senkrecht von der Mitte der Basisseite 7 ausgehend vorgesehen, das sich bis zum Klappgelenk 3 erstreckt. Von dort bis zur Spitze des Warndreiecks ist eine Teilfuge 12 vorgesehen, so daß zwei Dreiecksspitzen 13 mit der gleichen Fläche wie die Dreiecksspitzen 6 vorhanden sind. Werden nun die Dreiecksspitzen 6 und 13 auf die Tafelbereiche 2a, 2b geklappt und zusätzlich diese doppelten Bereiche um das Klappgelenk 11 übereinander geklappt, ergibt sich ein in Fig. 6 ersichtliches Paket, dessen Außenseiten durch die Dreiecksspitzen 6, 13 gebildet sind, die die übereinander geklappten Rechteckbereiche 2a, 2b einschließen.

Um zu erreichen, daß sich das Warndreieck nach Lösen eines Sperriegels 18 am Träger 8 selbsttätig aufstellt, können in die Klappgelenke 3, 5, 10, 11, wenn sie als Scharniere ausgebildet sind, Feder integriert sein, die die Dreiecksspitzen 4, 6, 13 in die ausgeklappte Stellung zwingen.

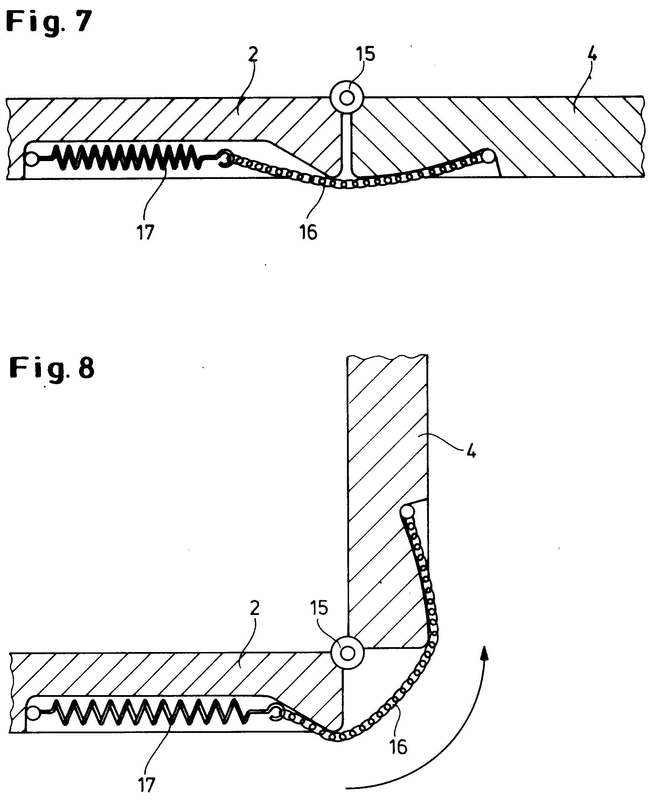

In den Fig. 7 und 8 ist eine andere Möglichkeit dargestellt, bei der in den Rechteckbereichen 2 bzw. 2a, 2b Zugfedern 17 angeordnet sind, die über Bänder 16 mit den Dreiecksspitzen 4, 6, 13 verbunden sind. Beim Zusammenklappen des Warndreiecks werden die Federn 17 gedehnt, so daß die Dreiecksspitzen 4, 6, 13 durch diese Federn 17 stets in die aufgeklappte Stellung bewegt werden.

Es ist auch möglich, nur eine Feder in der Tafel 2, 2a, 2b anzuordnen, die mit allen Dreiecksspitzen 4, 6, 13 zusammenwirkt, um das Warndreieck in die aufgerichtete Stellung zu bringen.

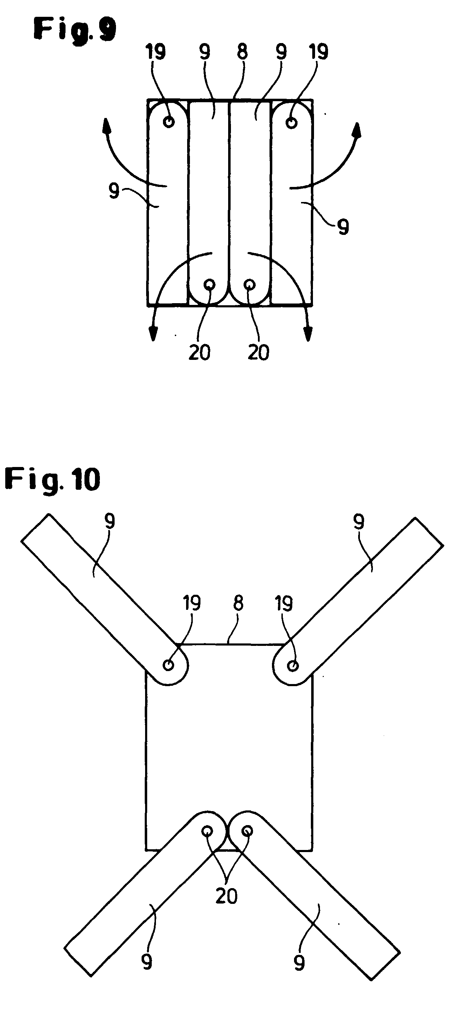

Wie aus den Fig. 9 bis 11 ersichtlich, kann das Warndreieck 1 vorzugsweise vier ausklappbare Stützen 9 aufweisen, die in der in Fig. 9 ersichtlichen Stellung parallel zueinander unter den Träger 8 klappbar sind. Zu diesem Zweck sind die äußeren Träger 9 mittels Klappgelenken 19 im Bereich der Ecken und benachbart zu einer Seite des Trägers 8 angeordnet, während die inneren Stützen 9 mittels Klappgelenken 20 benachbart zur parallelen, gegenüberliegenden Seite angeordnet sind und einem der Breite der Stützen 9 angepaßten Abstand zu den Ecken aufweisen.

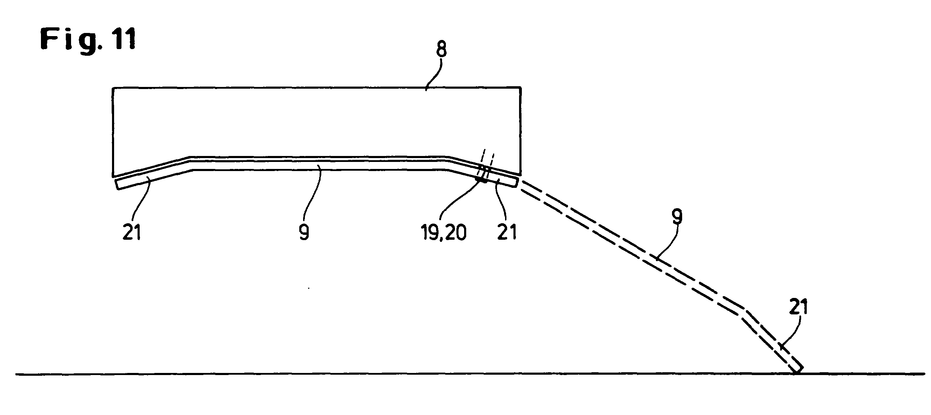

Die Enden 21 der Stützen 9 können, wie aus Fig. 11 ersichtlich, abgeknickt sein, wobei die Achsen der Klappgelenke 19, 20 in einem entsprechenden Winkel zur Ebene des Trägers 8 verlaufen. Auf diese Weise lassen sich die Stützen 9, wie in Fig. 11 dargestellt, raumsparend unter den Träger 8 klappen, nehmen jedoch in der ausgeklappten, gestrichelt dargestellten Stellung einen solchen Abstand vom Träger 8 ein, daß das Warndreieck 1 vom Boden einen ausreichenden Abstand erhält.

Die Stützen 9 lassen sich in nicht dargestellter Weise so bewegen, daß sie in der in Fig. 10 dargestellten Stellung an Rastvorsprüngen anliegen, so daß federelastische Elemente vorgesehen sein können, die die Stützen 9 nach Lösen einer Verriegelung automatisch in die in Fig. 10 dargestellte Stellung bringen. Die Verriegelung der Stützen 9 kann z. B. mit dem Sperriegel 18 für das Warndreieck zusammenwirken, so daß durch die Betätigung des Sperriegels 18 ein Aufrichten des Warndreiecks und ein Ausschwenken der Stützen 9 bewirkt wird.

Des weiteren kann ein Mechanismus vorgesehen sein, der beim Zurückklappen des Warndreiecks auf den Träger ein automatisches Einklappen der Dreiecksspitzen 4, 6, 13 und ggf. der Stützen 9 bewirkt.

## Patentansprüche

1. Warndreieck zum Mitführen in Kraftfahrzeugen aus einer formsteifen Tafel (2, 4, 6) mit
- Stützeinrichtungen (8, 9) zum freien Aufstellen
- wenigstens drei Klappgelenken (3, 5, 11) in der Tafel (2, 2a, 2b, 4, 6, 13) zum Zusammenklappen der Dreiecksspitzen (4, 6, 13) zu einer rechteckigen oder quadratischen Tafel (2, 2a, 2b, 4, 6, 13),
- Klappgelenken (19) an den Stützeinrichtungen (8, 9) zum Zusammenklappen auf das Format der Tafel (2, 2a, 2b, 4, 6, 13),
- Feststellelementen (14; 16, 17) für die Tafel (2, 2a, 2b, 4, 6, 13) und die Stützeinrichtungen (8, 9) zum Halten der ausgeklappten Dreiecksspitzen (4, 6, 13) und der Stützeinrichtungen (8, 9) in der aufgestellten Stellung.

2. Warndreieck nach Anspruch 1, **gekennzeichnet durch** ein Klappgelenk (3) parallel zu einer Seite (7) und auf halber Höhe des Dreiecks und zwei Klappgelenke (5) senkrecht zum ersten Klappgelenk (3), ausgehend von der einen Seite (7) mit jeweils einem Abstand gleich ein Viertel der Länge von den Endpunkten dieser Seite (7).

3. Warndreieck nach Anspruch 2, **gekennzeichnet durch** ein weiteres senkrecht auf der Mitte der einen Seite (7) verlaufendes Klappgelenk (11).

4. Warndreieck nach Anspruch 1, 2 oder 3, **gekennzeichnet durch** federelastische Feststellelemente (16, 17) zum Halten der ausgeklappten Dreiecksspitzen (4, 6, 13) und/oder der Stützeinrichtungen (8, 9) in der aufgestellten Stellung.

5. Warndreieck nach Anspruch 1, 2, 3 oder 4, **gekennzeichnet durch** schwenk- oder verschiebbare Sperriegel (14) zum Halten der ausgeklappten Dreiecksspitzen (4, 6, 13) und/oder der Stützeinrichtungen (8, 9) in der aufgestellten Stellung.

6. Warndreieck nach einem oder mehreren der Ansprüche 1 bis 5, **gekennzeichnet durch** eine Stützeinrichtung aus einem der zusammengeklappten Tafel (2, 2a, 2b, 4, 6, 13) entsprechenden Träger (8) mit wenigstens drei ausklappbaren Stützen (9).

7. Warndreieck nach Anspruch 6, **dadurch gekennzeichnet**, daß der Träger (8) als die zusammengeklappte Tafel (2, 2a, 2b, 4, 6, 13) aufnehmender Rahmen ausgebildet ist und die Tafel (2, 2a, 2b, 4, 6, 13) an einer Seite des Rahmens angelenkt ist.

8. Warndreieck nach Anspruch 6 oder 7, **dadurch gekennzeichnet**, daß die Enden (21) des Stützen (9) abgeknickt sind und die Achsen der Klappgelenke (19, 20) am Träger (8) entsprechend dem Winkel der Abknickung winklig zur Ebene des Trägers (8) verlaufen.

9. Warndreieck nach Anspruch 6, 7 oder 8, **dadurch gekennzeichnet**, daß zwei Stützen (9) an einer Seite im Bereich der Ecken des Trägers (8) angelenkt sind und zwei weitere Stützen (9) an der gegenüberliegenden Parallelseite des Trägers (8) mit einem der Breite der Stützen (9) angepaßten Abstand von den Ecken angelenkt sind.

10. Warndreieck nach einem oder mehreren der Ansprüche 4 bis 9, **dadurch gekennzeichnet**, daß die zusammengeklappte Tafel (2, 2a, 2b, 4, 6, 13) mittels Sperriegel (18) am Träger (8) gehalten wird.
